(19)

Europäisches Patentamt

European Patent Office

Office européen des brevets

(11) **EP 4 670 874 A1**

(12) **EUROPEAN PATENT APPLICATION**

(43) Date of publication:
**31.12.2025 Bulletin 2026/01**

(21) Application number: **24184180.8**

(22) Date of filing: **25.06.2024**

(51) International Patent Classification (IPC):
**B22F 10/85** (2021.01)      **B22F 10/28** (2021.01)
**B22F 12/90** (2021.01)      **B33Y 10/00** (2015.01)
**B33Y 30/00** (2015.01)      **B33Y 50/02** (2015.01)

(52) Cooperative Patent Classification (CPC):
(C-Sets available)
**B22F 10/28; B22F 10/85; B22F 12/90; B33Y 10/00; B33Y 30/00; B33Y 50/02** (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **TRUMPF Additive Manufacturing Italia S.r.l.**
**36015 Schio (VI) (IT)**

(72) Inventors:
• **Michieli, Niccolò**
  **36015 Schio (IT)**
• **Mantoan, Elia**
  **36036 Torrebelvicino (IT)**

(74) Representative: **Gleiss Große Schrell und Partner mbB**
**Leitzstraße 45**
**70469 Stuttgart (DE)**

(54) **METHOD FOR MEASURING AT LEAST ONE SYSTEM PARAMETER IN A MANUFACTURING DEVICE, METHOD FOR ADDITIVELY MANUFACTURING OBJECTS FROM A POWDER MATERIAL, COMPUTER PROGRAM, CONTROL DEVICE AND MANUFACTURING DEVICE**

(57)     The invention relates to a method for measuring at least one system parameter in a manufacturing device (1) for additively manufacturing objects from a powder material (5), the method comprising:
- evaluating at least two input states for a powder material layer;
- determining at least one measuring region in the powder material layer depending on the evaluation of the at least two input states, and
- measuring the at least one system parameter in the determined at least one measuring region.

Fig. 2

**(Cont. next page)**

(52) Cooperative Patent Classification (CPC): (Cont.)

C-Sets
B22F 2999/00, B22F 10/31, B22F 12/40;
B22F 2999/00, B22F 12/90, B22F 10/85,
B22F 10/37

**Description**

The invention relates to a method for measuring at least one system parameter in a manufacturing device for additively manufacturing objects from a powder material, a method for additively manufacturing objects from a powder material, a computer program, a control device adapted to carry out said method, and a manufacturing device for additively manufacturing objects from a powder material.

System parameters such as optical system parameters like, e.g., an energy beam alignment or a focus position orthogonal to a powder material layer - or, synonymously, powder bed layer -, or powder properties like, e.g., humidity, compactness, cleanness, or purity, may be directly measured in a working area of a manufacturing device for additively manufacturing objects from a powder material, in particular directly in a powder material layer. Further, such measurements may be carried out along with the building process - in particular by using an optical system of the manufacturing device - in order to monitor or confirm the system parameters during the building process. Since these measurements typically include interactions of an energy beam with the powder material, and in particular an additional input of energy and/or momentum into the powder, the measurements should be made outside any regions in which the building process actually includes melting the powder, and preferably also not above or at least with sufficient vertical distance to any regions in which previously or afterwards powder was or will be melted in order to build an object. Further, the measurements should not be carried out in regions which comprise any defects of the powder material layer or of a currently built object. There might be other boundaries parameters which should be considered when choosing a measuring region for carrying out the measurements. It is thus a difficult and cumbersome task to determine such measuring regions in advance, and in particular for each powder material layer. However, it is nearly impossible to manually select appropriate measuring regions in real time during the building process. It is also not feasible to just simply define measuring regions in advance, because at least certain circumstances, like the emergence of defects in the powder material layer, cannot be anticipated; also, the specific location of objects or part of objects in the powder material layers may vary between different building processes. Further, rigidly reserving certain regions in all powder material layers for the measurements leads to an unwantedly reduced flexibility in the definition of built jobs.

It is therefore an objective of the invention to provide a method for measuring at least one system parameter in a manufacturing device for additively manufacturing objects from a powder material, a method for additively manufacturing objects from a powder material, a computer program, a control device adapted to carry out said method, and a manufacturing device for additively manufacturing objects from a powder material, in order to overcome at least some of the above-described problems to at least some extent.

This objective is achieved by providing the present technical teachings, in particular the teachings of the independent claims as well as the teachings of the dependent claims and the preferred embodiments disclosed in the description.

According to a first aspect, the objective is in particular achieved by providing a method for measuring at least one system parameter in a manufacturing device for additively manufacturing objects from a powder material - hereinafter referred to as "measuring method" -, the method comprising: - automatically - evaluating at least two input states for a powder material layer; - automatically - determining at least one measuring region in the powder material layer depending on the evaluation of the at least two input states, and measuring the at least one system parameter in the determined at least one measuring region - in particular if the determined at least one measuring region is not nil. Advantageously, the proposed method makes it possible to find at least one measuring region in at least almost every powder material layer, while at the same time observing respective limitations and boundaries, and while still preserving the flexibility in the definition of build jobs. Moreover, the method enables a harmonization of the measurements with the building process. In particular, the measuring regions have not to be defined in advance, but can be identified and chosen in real time, observing any actual developments like emerging defects. Thus, it is at least easier, if not only possible with the proposed method, to constantly monitor the system parameters in a large plurality of powder material layers, even in every powder material layer. This, in turn, enhances the stability of the building process and the quality of the resulting objects.

According to the present invention, the at least two input states are automatically, in particular computationally, evaluated. Further, the at least one measuring region is automatically, in particular computationally, determined.

In particular, the at least one system parameter is automatically measured.

Preferably, if the determined at least one measuring region is nil, the measuring step is omitted.

In the context of the present technical teachings, a system parameter is in particular understood to mean a parameter of or related to a manufacturing ensemble, including the manufacturing device and the powder material, in particular related to at least one energy beam of the manufacturing device, or related to a property of the powder material.

In an embodiment, the at least one system parameter is measured using a measurement system of the manufacturing device, in particular a dedicated measurement system or another measurement system also assigned to other tasks. Preferably, an optical system is used, in particular any optical camera including a powder bed monitoring camera. Preferably, an interaction of an energy beam with the powder material is observed in order to measure the at least one system parameter.

In the context of the present technical teachings, additively manufacturing objects from a powder material is in particular understood to mean manufacturing at least one object by locally selectively irradiating a plurality of powder material layers, layer by layer, with at the least one energy beam of the manufacturing device.

In the context of the present technical teachings, a measuring region is in particular understood to mean a region or an area in a powder material, in which the at least one system parameter may be measured, in particular is allowed or foreseen to be measured, or in which the at least one system parameter is actually measured.

In an embodiment, the steps of the measuring method are carried out for a plurality of powder material layers arranged in a temporal layer sequence - one after the other, in temporal succession, i.e. layer by layer - in a working area of the manufacturing device. In an embodiment, the steps of the measuring method are carried out for each powder material layer.

The working area may be identical to the powder material layer, or smaller than the - current - powder material layer, if the powder material layer extends beyond a boundary of the working area in at least one direction.

Additive or generative manufacturing or production of an object or workpiece is in particular understood to mean in particular a manufacturing process selected from a group, consisting of selective laser sintering, laser metal fusion (LMF), direct metal laser melting (DMLM), laser net shaping manufacturing (LNSM), selective electron beam melting ((S) EBM), and laser engineered net shaping (LENS). Accordingly, the manufacturing device disclosed below is particularly adapted to perform at least one of the aforementioned additive or generative manufacturing processes.

Preferably, the energy beam is selected from a group, consisting of an electromagnetic beam, in particular an optical working beam, in particular a laser beam, and a particle beam, in particular an electron beam. The optical working beam may be continuous or pulsed, in particular a continuous laser beam or a pulsed laser beam.

In an embodiment, at least one of the at least two input states is selected from a group, consisting of a geometry of an object's section in the powder material layer, a geometry of an object's section in a previous powder material layer below the powder material layer, a geometry of an object's section in a subsequent powder material layer above the powder material layer, a powder bed property, a user defined condition, a predefined developer condition, an energy beam-related condition, a detector-related condition, a measurement-related condition, and a combination of at least two of said input states. Advantageously, each of these input states is relevant for the question whether a certain region or area might be used for measuring the at least one system parameter; thus, by considering at least one of these input states, a sensible choice of the measuring region can be made.

When additively manufacturing an object from a powder material, layer by layer, a section of the object to be manufactured is solidified by locally melting the powder material in each powder material layer of a plurality of powder material layers. To this effect, the three-dimensional object to be manufactured is virtually sliced in a plurality of sections, wherein each section is assigned to a powder material layer of the plurality of powder material layers.

In the context of the present technical teachings, a geometry of an object's section in the powder material layer is in particular understood to mean a geometry of the object's section in the current or actual powder material layer which is currently considered or irradiated with the at least one energy beam. By considering the geometry of the object's section in the current powder material layer as an input state, it can advantageously be avoided that the at least one system parameter is measured in a region where the powder material is melted by the at least one energy beam. A predefined or parametrizable margin may be taken into account around the geometry of the object's section.

In the context of the present technical teachings, a geometry of an object's section in the previous powder material layer below the powder material layer is in particular understood to mean a geometry of the object's section in any of the powder material layers irradiated prior to the current or actual powder material layer and thus located beneath the current or actual powder material layer. By considering the geometry of the object's section in the previous powder material layer as an input state, it can advantageously be avoided that additional input of energy and/or momentum during the measurement adversely affects already built parts of the object. A predefined or parametrizable margin may be taken into account around the geometry of the object's section. A single previous powder material layer or any given number - greater than one - of previous powder material layers may be taken into account, in particular by combining the results obtained for each of the previous powder material layers. In an embodiment, all previous powder material layers may be taken into account.

In the context of the present technical teachings, a geometry of an object's section in a subsequent powder material layer above the powder material layer is in particular understood to mean a geometry of the object's section in any of the powder material layers irradiated after the current or actual powder material layer and thus located - for the moment hypothetically - above the current or actual powder material layer. By considering the geometry of the object's section in the subsequent powder material layer as an input state, it can advantageously be avoided that additional input of energy and/or momentum during the measurement adversely affects parts of the object built afterwards. A predefined or parametrizable margin may be taken into account around the geometry of the object's section. A single subsequent powder material layer or any given number - greater than one - of subsequent powder material layers may be taken into account, in particular by combining the results obtained for each of the subsequent powder material layers. In an embodiment, all subsequent powder material layers may be taken into account.

In the context of the present technical teachings, a powder bed property in particular is understood to mean a - in particular local - property of the powder material layer, in particular of the current or actual powder material layer. Thus, the powder bed property in particular is a local powder bed property. By considering the powder bed property as an input state, it can advantageously be avoided that the at least one system parameter is measured in a region or an area where the powder material layer is in some way deficient, which might have a detrimental effect to the measurement. In an embodiment, the powder bed property comprises at least one property selected from a group, consisting of a powder deficient region, a powder overflowing region, a powder defect region, an object defect region, and a combination of at least two of said properties.

For the sake of clarity, a powder bed property may be as well an input state and a system parameter to be measured. In this respect, different powder bed properties may serve as input states on the one hand, and system parameters on the other hand; further, the same powder bed property may serve as an input state if the respective property is known beforehand or observable in another way, or the respective property may serve as a system parameter if the respective property is not known or otherwise observable but can be revealed by measurement of the system parameter.

In the context of the present technical teachings, a powder deficient region in particular is understood to mean a region or an area of a powder material layer which is short of powder material, i.e. which comprises too little powder material, or less powder material than other regions of the powder material layer, in particular less powder material than the powder material layer comprises on average, or less powder material as compared to a predetermined amount or areal density of the powder material in the powder material layer.

In the context of the present technical teachings, a powder overflowing region in particular is understood to mean a region or an area of a powder material layer which is oversupplied of powder material, i.e. which comprises too much powder material, or more powder material than other regions of the powder material layer, in particular more powder material than the powder material layer comprises on average, or more powder material as compared to a predetermined amount or areal density of the powder material in the powder material layer.

In the context of the present technical teachings, a powder defect region in particular is understood to mean a region or an area of a powder material layer where the powder material layer is in another way defective than just having too much or too little powder material. In particular, a powder defect may be a local elevation or depression in the powder material layer, which might be caused by a defect in a powder distribution device.

In the context of the present technical teachings, an object defect region in particular is understood to mean a region or an area of a powder material layer where a defect of a manufactured object is present, in particular a projection or an edge projecting from a previous powder material layer due to a defective melting of the powder material, e.g. caused by sputtering of molten powder material.

In the context of the present technical teachings, a user defined condition in particular is understood to mean any condition, limitation or boundary which is defined by a user. In particular, the user defined condition may be defined prior to a building process and particularly for a plurality of building processes, or the user defined condition may be defined prior to a specific building process and be specifically adapted to this specific building process, or the user defined condition may be defined, in particular manually input, by the user during an ongoing building process, in particular in response to certain observations of the user during the building process. A user defined condition may comprise certain regions or areas of the working area which the user wishes to exclude from the measurement or assign a lower score to, or which the user may assign a higher score to, or in which the user may even exclusively permit the measurements, while all other regions or areas might possibly be excluded. A user defined condition may be chosen in accordance with certain preferences of a user.

In the context of the present technical teachings, a predefined developer condition in particular is understood to mean a condition, limitation or boundary which is predefined by a developer, in particular prior to any building process or prior to a specific class of building processes. Such a developer condition might assign a lower score to, exclude, assign a higher score to, or even exclusively permit certain areas or regions for technical reasons.

In the context of the present technical teachings, an energy beam-related condition in particular is understood to mean a condition, limitation or boundary which results from the energy beam or a scanning device adapted to scan the energy beam across the working area. Such an energy beam-related condition may include regions or areas which the energy beam can or cannot reach.

In the context of the present technical teachings, a detector-related condition in particular is understood to mean a condition, limitation or boundary which results from a detector used to measure the at least one system parameter. Such a detector-related condition may include a field of view of at least one detector, or a combination of field of views of a plurality of detectors.

In the context of the present technical teachings, a measurement-related condition in particular is understood to mean a condition, limitation or boundary which resulted from any requirement of the measurement of the at least one system parameter itself. Such a measurement-related condition may be a size or shape of a region or area required for the measurement, in particular a minimum size of the required area, particularly a minimum contiguous area required for the measurement.

In an embodiment, the local powder bed property includes or is derived from data from a powder bed monitoring, preferably from a powder bed monitoring device, wherein optionally the local powder bed property comprises at least one property selected from the group, consisting of a powder deficient region, a powder overflowing region, a powder defect region, an object defect region, and a combination of at least two of said properties. Advantageously, the powder bed monitoring is already provided in the manufacturing device in order to monitor the powder material layers, such that the respective data is readily available and can beneficially be used as an input state for the measuring method. In particular, a powder bed monitoring device, or a control device connected to the powder bed monitoring device, of the manufacturing device may be adapted to take a first image of the powder bed prior to distributing a new powder bed layer in the working area, and a second image of the powder bed after distributing the new powder bed layer in the working area; in particular by comparison of the first and second images, it is possible to obtain local powder bed properties, preferably selected from the group defined above.

The powder bed monitoring may include image data from a powder bed camera - as the powder bed monitoring device - wherein the camera might be realised as an areal camera, in particular observing the complete working area, or a local camera, in particular realised by a radiation sensitive device, comprising only one or a small number of pixels, in particular a photodiode, located on-axis on an optical axis of the at least one energy beam, wherein this local camera is in particular adapted to scan the working area with the same scanning device which is provided for the displacement or scanning of the energy beam across the working area.

In an embodiment, the method is - in particular subsequently - carried out for a plurality of powder material layers. Advantageously, in this way the at least one system parameter may be monitored during the building process, enhancing reproducibility and the quality of the process and lowering a rejection rate with respect to the manufactured objects.

In an embodiment, the method is carried out for each powder material layer, in particular layer by layer.

In an embodiment, the at least two input states are evaluated by determining a respective region of interest in the powder material layer for each input state, and the at least one measuring region is determined by combining the at least two regions of interest. Advantageously, in this way a reliable choice of the at least measurement region can be made.

In an embodiment, the at least two regions of interest are combined by at least one operation, selected from a group - hereinafter referred to as the "operation group" -, consisting of an intersection creation, an union creation, a subtraction, a convolution, and a combination of at least two of said operations. Advantageously, in this way a reliable and further computationally feasible choice of the at least measurement region can be made.

In particular, each input state leads to preference or selection, or disapproval or exclusion, of certain areas or regions of the working area, thus resulting in a region of interest in accordance with the input state. The different regions of interest resulting from the different input states then are advantageously combined, in particular by using the at least one operation selected from the operation group, in order to identify at least one remaining part of the working area as the measurement region.

In the context of the present technical teachings, an intersection creation in particular is understood to mean an operator intersecting, i.e. defining an intersection of, two sets, in particular yielding an intersection of two regions or areas.

In the context of the present technical teachings, a union creation in particular is understood to mean an operator unifying two sets, in particular regions or areas.

In the context of the present technical teachings, a subtraction in particular is understood to mean an operator which subtracts one set from another set, in particular subtracts or eliminates one region or area from another region or area.

In the context of the present technical teachings, a convolution in particular is understood to mean a mathematical convolution of an area with another area, e.g., an area required for the measurement with a - typically larger - combined region of interest resulting from other input states, in particular according to the following equation:

$$(a * b)(x, y) = \iint a(\gamma, \delta) b(x - \gamma, y - \delta) d\gamma d\delta \qquad (1)$$

with $(a*b)(x,y)$ being the convolution of a first area $a(x,y)$ with a second area $b(x,y)$.

In an embodiment, more than two regions of interest are subsequently combined. In this way, the method is able to take a plurality of more than two input states into account.

Preferably, the more than two regions are sequentially combined with each other, in particular in a plurality of subsequent computational steps. Alternatively, the more than two regions are at once combined with each other, in particular in a single computational step.

In an embodiment, the more than two regions of interest are subsequently combined by first combining two regions of interest, obtaining a resulting region of interest, and then combining the resulting region of interest with a further region of interest, and optionally continuing this process until all regions of interest are combined and a final resulting region of interest is obtained, wherein the final resulting region of interest is the at least one measuring region. In this way, a structured, reliable and computationally feasible method is provided in order to determine the at least one measuring region. The final resulting region of interest, and thus also the measuring region, may be nil, or - in other words - empty.

In an embodiment, a first region of interest is combined with a second region of interest by a first operation selected from the operation group, obtaining a first resulting region of interest, and the first resulting region of interest is combined with a third region of interest by a second operation selected from the operation group, obtaining a second resulting region of interest. The first operation and the second operation may be identical or differ from each other. The second resulting region of interest may be combined with a fourth region of interest by a third operation selected from the operation group, obtaining a third resulting region of interest. The third operation may be identical to the first or the second operation, or may be different from the first and the second operation. This process may be continued until all regions of interests are combined, and the final resulting region of interest is obtained as the at least one measuring region.

In an embodiment, a geometry of an object's section in the current powder material layer as a first input state is evaluated, and a first region of interest is obtained. In addition, a geometry of the object's section in at least one previous powder material layer below the current powder material layer is evaluated, and at least one second region of interest is obtained. The first region of interest and the at least one second region of interest are combined by an operation, selected from the intersection operation and the union operation, i.e. the union or the intersection of the first and second regions of interests is calculated in order to obtain a first resulting region of interest. Further, a geometry of an object's section in at least one subsequent powder material layer above the powder material layer may be taken into account in an analogous way.

In particular, if the respective regions of interest are the areas of the object's sections - optionally including a predefined or parametrizable margin -, these regions of interest are unified by the union operation in order to obtain a unified region of interest. For further steps of the method, this unified region of interest is preferably subtracted from the working area - or a previously obtained region of interest - in order to obtain the first resulting region of interest consisting of the working area - or the previously obtained region of interest - minus the unified region of interest. If, otherwise, the working area minus the respective areas of the object's sections - optionally including a predefined or parametrizable margin -, is used as the regions of interest, these regions of interest are intersected by the intersection operation in order to obtain the first resulting region of interest.

In an embodiment, a geometry of an object's section in the current powder material layer as a first input state is evaluated, and a first region of interest is obtained. In addition, geometries of the object's section in a finite, predefined or parametrizable number of previous powder material layers below the current powder material layer and/or a finite, predefined or parametrizable number of subsequent powder material layers above the current powder material layer is evaluated, and respective second regions of interest are obtained. The first region of interest and the second regions of interest are combined by the operation, selected from the intersection operation and the union operation, as explained above, in order to obtain the first resulting region of interest.

Preferably, the region of interest resulting from the object's section in the current powder material layer and all regions of interest resulting from the object's sections in all previous powder material layers beneath - and/or all subsequent powder material layers above - the current powder material layer are combined with each other - in a first step - by the operation, selected from the intersection operation and the union operation, as explained above, in order to obtain the first resulting region of interest.

Optionally, in a second step, at least one powder bed property is evaluated as an input state, and a third region of interest is obtained. This third region of interest is subtracted from the preceding, in particular the first resulting region of interest, and a next, in particular second resulting region of interest is thus obtained. Preferably, different powder bed properties are evaluated, and all respectively obtained regions of interest are subtracted from the preceding resulting region of interest in order to obtain the second resulting region of interest.

Optionally, in a third step, at least one condition, selected from a user-defined condition, a predefined developer condition, and an energy beam-related condition, is evaluated as an input state, and a fourth region of interest is obtained. This fourth region of interest is subtracted from the preceding, in particular the second resulting region of interest, and a next, in particular third resulting region of interest is thus obtained. Preferably, at least two of said conditions, in particular all three conditions, are evaluated as input states, resulting in at least two, preferably three regions of interest, which are subtracted from the second resulting region of interest in order to obtain the third resulting region of interest.

Optionally, in a fourth step, at least one detector-related condition, in particular at least one field of view, is evaluated as an input state, and a fifth region of interest is obtained. Then, this fifth region of interest is intersected with the preceding, in particular the third resulting region of interest, thus obatining a next, in particular fourth resulting region of interest.

Optionally, in a fifth step, at least one measurement-related condition, in particular a size and shape of a region or area required for the measurement of the at least one system parameter, is evaluated as an input state, and a sixth region of interest is obtained. This sixth region of interest then is convoluted with the preceding, in particular the fourth resulting region of interest, thus obatining a next, in particular fifth resulting region of interest.

Optionally, in a sixth step, the preceding, in particular the fifth resulting region of interest is combined with further prescriptions or requirements, in particular convoluted, in order to obtain a next, in particular sixth resulting region of interest. Such further prescriptions or requirements may be, e.g., a number of required measurement regions, a geometrical distribution or condition for their distribution across the working area, e.g., "not aligned along the x-axis", and/or a minimum distance between them.

Preferably, the last resulting region of interest is obtained as the at least one measurement region. The last resulting region of interest may be nil, if no viable, finite region of the powder material layer remains.

In particular, any of the above-described first to sixth steps may be carried out alone or in combination with any other and any number of these steps. Particularly, only a selection of these steps may be carried out.

Moreover, the above-described first to sixth steps may be carried out in the described order, or in any other order, or at least one of these steps may be carried out a plurality of times, either in immediate succession, or distributed along a sequence of steps.

Further, it is not necessary that all the intermediary resulting regions of interest are explicitly calculated, rather, this may be omitted, and instead a sequence of interesting regions may be combined by different operations, while a number of intermediary resulting regions or only the last, final resulting region may explicitly be obtained.

In an embodiment, the regions of interest are obtained as binary areas. In this way, the method is advantageously computationally very simple and fast. In the context of the present technical teachings, binary areas in particular are understood to mean areas which are either to be included or to be excluded from further consideration. In particular, such regions may be assigned a score value of either zero, if they are to be excluded from further consideration, or one if they are to be further considered.

In the alternative, the regions of interest are obtained as maps of rated areas, each area being assigned a - finite - score value, in particular a score value between zero and one. In this way, the method may advantageously be very flexible and sophisticated. Preferably, the more appropriate an area is to be used as a measurement region, the higher - in particular closer to one - is the score value assigned to this area.

In an embodiment, a single region of interest may be a map comprising more than one rated area, i.e. a single region of interest may include a plurality of different score values assigned to different parts of the region of interest.

In an embodiment, when two regions are combined by an operation selected from the operation group, the respective score values assigned to the regions are combined according to the operation, and a respectively combined score value is obtained which is assigned to the resulting region.

In an embodiment, the regions of interests are obtained in a combined approach, i.e. binary areas and maps of rated areas are combined. In particular, at least one region of interest is obtained as a binary area, while at least one other region of interest is assigned a finite score value. In particular, in an embodiment, some of the regions of interest are obtained as binary areas, while other regions of interest are assigned a finite score value. Thus, the different approaches in evaluating the input data and obtaining a respective result can be mixed.

In a particularly advantageous approach, input data which allows for a differentiated consideration is handled by assigning finite score values, thus marking different regions or areas as more or less preferred for the measurements, while input data which leads to a hard inclusion or exclusion of areas, like, e.g., a detector's field of view or a region which can or cannot be reached by a specific energy beam, is handled with a binary approach, resulting in binary regions of interest.

In an embodiment, the at least one measuring region is determined by a binary decision. This is in particular computationally simple and fast to achieve, when the regions of interests are obtained as binary areas.

In the alternative, the at least one measuring region is determined as at least one finally rated area. Thus, the method can be very flexible and sophisticated, in particular when the regions of interest are obtained as maps of rated areas. Further, a combined approach may also be used to determine the at least one measuring region.

Optionally, the at least one finally rated area is assigned a final score value obtained from the score values assigned to the rated areas of the regions of interest.

In an embodiment, the at least one system parameter is selected from a group, consisting of an energy beam alignment, a focus position, a powder property, a powder humidity, a powder compactness, a powder cleanness, a powder purity, and a combination of at least two of said system parameters.

In the context of the present technical teachings, an energy beam alignment in particular is understood to mean at least one of: an alignment of one energy beam in a machine coordinate system, and an alignment of at least two different energy beams relative to each other.

In the context of the present technical teachings, a focus position in particular is understood to mean a position of a focal point region, in particular a focal waist, of an energy beam, as a distance measured orthogonally to the working area, in particular the current powder material layer.

In the context of the present technical teachings, a powder humidity in particular is understood to mean a local or global humidity, i.e. liquid content, in particular water content, of the powder material.

In the context of the present technical teachings, a powder compactness in particular is understood to mean a local or global compactness, in particular bulk density, of the powder material.

In the context of the present technical teachings, a powder cleanness in particular is understood to mean a local or global cleanness of the powder material, in particular a degree of contamination of the powder material with foreign substances originally not belonging to the powder material.

In the context of the present technical teachings, a powder material purity in particular is understood to mean a local or global purity of the powder material, in particular an amount of a specific component of the powder material in relation to the powder material as a whole.

In an embodiment, when more than one measurement region is obtained, a user is prompted to manually choose one of the measurement regions for the measurement. In the alternative, one of the measurement regions is chosen automatically, according to at least one predefined rule or randomly, in particular by applying a random generator. Still in the alternative, if score values are assigned to the measurement regions, a measurement region is chosen in accordance with the assigned score values. In particular, the measurement region having the higher score value is selected for the measurement.

In an embodiment, when more than one measurement region is obtained, the at least one system parameter is measured in at least two of the obtained measurement regions. Preferably, the results of these measurements are combined to obtain additional information, in particular information which cannot be obtained by only measuring in one single measurement region. For example, the focus position of an energy beam might be measured in three separate points in the working area, thus enabling to learn a 3D orientation of the focal plane with respect to the working area.

According to a second aspect, the objective is also achieved by providing a method for additively manufacturing an object from a powder material using a manufacturing device - hereinafter referred to as "manufacturing method" -, comprising the following steps: manufacturing the object by locally selectively irradiating a first plurality of powder material layers, layer by layer, with at least one energy beam of the manufacturing device, and measuring at least one system parameter of the manufacturing device by carrying out the measuring method according to the invention or a measuring method according to any of the above disclosed embodiments, wherein the at least one system parameter is measured prior to the manufacturing of the object, or after the manufacturing of the object, or during the manufacturing of the object, in particular by carrying out the measuring method for at least one of the powder material layers, or for a second plurality of powder material layers, the second plurality comprising a lower number of powder material layers then the first plurality, or for all powder material layers of the first plurality. With respect to the manufacturing method, in particular the same advantages are achieved as explained above in relation to the measuring method.

In an embodiment, a manufacturing device according to the invention or according to any of the below disclosed embodiments is used in the manufacturing method.

According to a third aspect, the objective is also achieved by providing a computer program comprising instructions which, when the computer program is executed on a computing device, cause the computing device to carry out a measuring method according to the invention, or a manufacturing method according to the invention, or a method according to any of the above disclosed embodiments of the measuring method or the manufacturing method. With respect to the computer program, in particular the same advantages are achieved as explained above in relation to the measuring method or the manufacturing method.

Also part of the invention is a - in particular electronically readable, or otherwise machine-readable - storage medium, comprising the computer program.

According to a fourth aspect, the objective is also achieved by providing a control device for controlling a manufacturing device for additively manufacturing objects from a powder material, the control device being adapted to carry out a method according to the invention or according to any of the above disclosed embodiments, i.e. a measuring method or a manufacturing method. With respect to the control device, in particular the same advantages are achieved as explained above in relation to the measuring method, the manufacturing method, or the computer program.

In an embodiment, the control device is adapted to control a manufacturing device according to the invention or according to any of the below disclosed embodiments.

In an embodiment, the control device is selected from a group consisting of a computer, in particular a personal computer (PC), a plug-in card or driver card, and an FPGA board. In a preferred embodiment, the control device is an RTC5 or RTC6 control card from SCANLAB GmbH, in particular in the embodiment currently available on the date determining the priority of the present teachings.

According to a fifth aspect, the objective is also achieved by providing a manufacturing device for additively manufacturing objects from a powder material, having a beam generating device adapted to generate at least one energy beam, at least one scanning device adapted to locally selectively irradiate a working area with the at least one energy beam to produce an object from the powder material disposed in the working area by displacing the at least one energy beam across the working area, and a control device according to the invention or according to any of the above disclosed embodiments. With respect to the manufacturing device, in particular the same advantages are achieved as explained above in relation to the measuring method, the manufacturing method, the computer program, or the control device.

In particular, the control device is operatively connected to the scanning device and adapted to control the scanning device.

In an embodiment, the manufacturing device comprises a powder bed monitoring device adapted to monitor the powder bed. Preferably, the control device is operatively connected to the powder bed monitoring device.

In an embodiment, the manufacturing device comprises a - in particular dedicated - measuring device adapted to measure the at least one system parameter. Preferably, the control device is operatively connected to the measuring device.

In addition or in the alternative to the presence of a dedicated measuring device, the powder bed monitoring device is used as the measuring device.

The scanning device preferably comprises at least one scanner, in particular a galvanometer scanner, piezo scanner, polygon scanner, MEMS scanner, and/or a working head or processing head displaceable relative to the working area.

A working head or processing head displaceable relative to the working area is in particular understood to mean an integrated component of the manufacturing device, which has at least one radiation outlet for at least one energy beam, the integrated component, that is the working head, being displaceable as a whole relative to the working area along at least one displacement direction, preferably along two displacement directions perpendicular to each other. Such a working head can in particular be of portal design, or be guided by a robot. In particular, the working head can be designed as a robot hand of a robot.

In particular, the beam generating device is a laser, or comprises a plurality of lasers. The at least one energy beam then advantageously is generated as an intense beam of coherent electromagnetic radiation, in particular coherent light. In this respect, "irradiation" preferably means "exposure to light".

In an embodiment, he manufacturing device is adapted for selective laser sintering. Alternatively, or additionally, the manufacturing device is adapted for selective laser melting.

The invention is explained below in further detail with reference the drawing. In the drawing

Figure 1     shows an embodiment of a manufacturing device comprising an embodiment of a control device;

Figure 2     shows a schematic representation of an embodiment of a measuring method for measuring at least one system parameter in the manufacturing device according to figure 1.

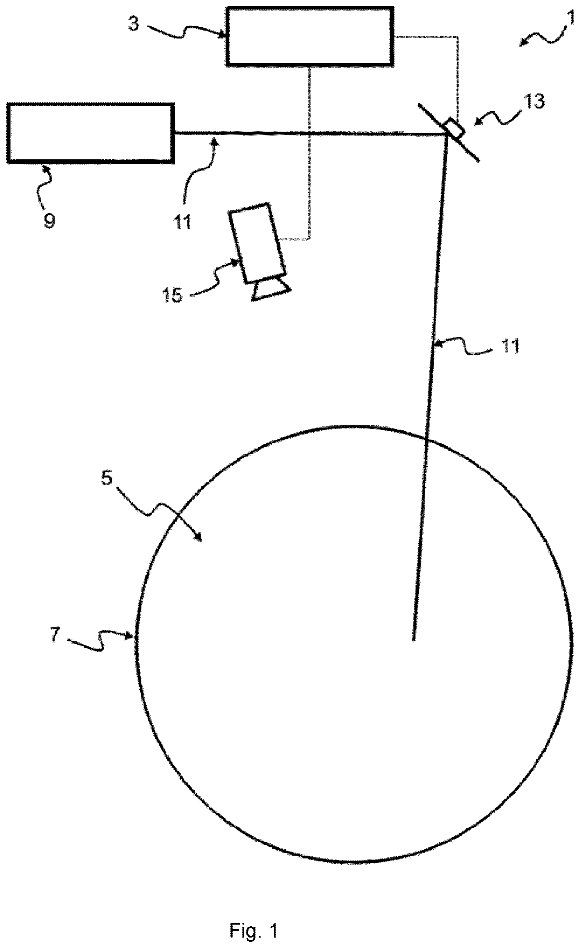

**Fig. 1** shows an embodiment of a manufacturing device 1 comprising an embodiment of a control device 3.

The manufacturing device 1 is adapted to additively manufacture objects from a powder material 5 arranged layer by layer in a working area 7. The manufacturing device 1 has a beam generating device 9, preferably a laser, adapted to generate at least one energy beam 11, preferably a laser beam, at least one scanning device 13, preferably a galvanometer scanner, adapted to locally selectively irradiate the working area 7 with the at least one energy beam 11 to produce an object from the powder material 5 disposed in the working area 7 by displacing the at least one energy beam 11 across the working area 7, and the control device 3. Further, the manufacturing device 1 comprises a powder bed monitoring device 15 adapted to monitor a powder bed in the working area 7, e.g. a camera. The manufacturing device 1 may comprise an additional, dedicated measuring device adapted to measure at least one system parameter of the manufacturing device 1; however, the powder bed monitoring device 15 may be used as such a measuring device, as it is the case in the embodiment shown here.

The control device 3 is operatively connected to the scanning device 13 and adapted to control the scanning device 13. Additionally, the control device 3 is operatively connected to the powder bed monitoring device 15.

Further, the control device 3 is adapted to carry out a method described below.

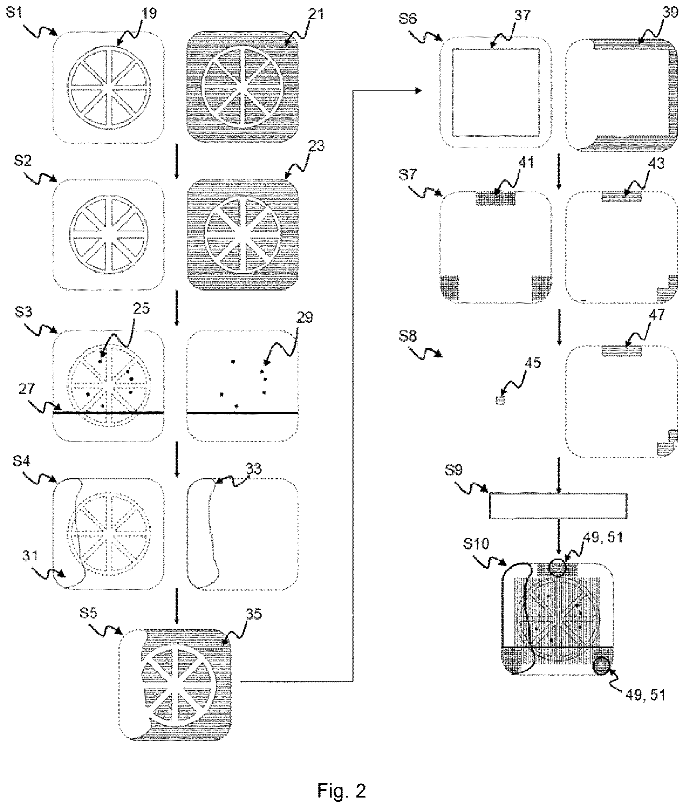

**Fig. 2** shows a schematic representation of an embodiment of a measuring method for measuring at least one system parameter in the manufacturing device 1 according to figure 1.

The same or functionally equivalent elements are assigned the same reference numerals in all figures, such that reference is made in each case to the preceding explanations.

The measuring method comprises: automatically evaluating at least two input states for a powder material layer; automatically determining at least one measuring region in the powder material layer depending on the evaluation of the at least two input states, and measuring the at least one system parameter in the determined at least one measuring region.

At least one of the at least two input states is preferably selected from a group, consisting of a geometry of an object's section in the powder material layer, a geometry of an object's section in a previous powder material layer below the powder material layer, a geometry of an object's section in a subsequent powder material layer above the powder material layer, a powder bed property, a user defined condition, a predefined developer condition, an energy beam-related condition, a detector-related condition, a measurement-related condition, and a combination of at least two of said input states.

Preferably, the at least two input states are evaluated by determining the respective region of interest in the powder material layer for each input state, and the at least one measuring region is determined by combining the at least two regions of interest, preferably by at least one operation, selected from a group, consisting of an intersection creation, an union creation, a subtraction, a convolution, and a combination of at least two of said operations.

Preferably, more than two regions of interest are subsequently combined. In this way, the method is able to take a plurality of more than two input states into account.

The more than two regions may sequentially be combined with each other, in particular in a plurality of subsequent computational steps. Alternatively, the more than two regions are at once combined with each other, in particular in a single computational step.

In the embodiment shown here, in a first step S1, a geometry of an object's section 19 in the current powder material layer is evaluated as a first input state, and a first region of interest 21 is obtained, in particular as the working are minus an area of the object's section 19. In addition, in a second step S2 all the geometries of the object's sections in the previous powder material layers below - and/or the subsequent powder material layers above - the current powder material layer are evaluated, obtaining a plurality of regions of interest, and an intersection is calculated between the plurality of regions of interest and the first region of interest 21, thus obtaining a first resulting region of interest 23.

Then, preferably, at least one powder bed property stemming from data of the powder bed monitoring device 15 is evaluated as an input state.

In a third step S3, object defect regions 25 and a powder defect region 27 are evaluated as powder bed properties, and third regions of interest 29 are obtained.

In a fourth step S4, a powder defect region 31, in particular a powder deficient region, is evaluated as a further powder bed property, and a fourth region of interest 33 is obtained.

In a fifth step S5, the third regions of interest 29 and the fourth region of interest 33 are subtracted from the first resulting region of interest 23, and a second resulting region of interest 35 is obtained.

In a sixth step S6, at least one condition, selected from a user-defined condition, a predefined developer condition, and an energy beam-related condition, is evaluated as an input state, and a fifth region of interest 37 is obtained, which is subtracted from the second resulting region of interest 35, obtaining a third resulting region of interest 39.

In a seventh step S7, at least one detector-related condition, in particular a field of view of the powder bed monitoring device 15 or of the dedicated measuring device, is evaluated as an input state, and a sixth region of interest 41 is obtained, the sixth region of interest 41 comprising three separate areas. This sixth region of interest 41 is intersected with the third resulting region of interest 39, thus obatining a fourth resulting region of interest 43.

In an eight step S8, at least one measurement-related condition, in particular a size and shape of a region or area required for the measurement of the at least one system parameter, is evaluated as an input state, and a sixth region of interest 45 is obtained. This sixth region of interest 45 is convoluted with the fourth resulting region of interest 43, thus obatining a fifth resulting region of interest 47.

In a nineth step S9, the fifth resulting region of interest 47 is preferably convoluted with further prescriptions or requirements, obtaining a sixth resulting region of interest 49. In the embodiment shown here, the prescriptions or requirements are a number of required measurement regions - two in this specific case -, a geometrical condition for their distribution across the working area 7, here that they must not be aligned along the horizontal x-axis, and a minimum distance between them.

Finally, in this case a last resulting region of interest 51 is obtained which comprises two viable measurement regions 53.

In such a case, where more than one measurement region 53 is obtained, a user may be prompted to manually choose one of the measurement regions 53 for the moment, or one of the measurement regions 53 may be chosen automatically, according to at least one predefined rule or randomly, in particular by applying a random generator, or, if score values are assigned to the measurement regions 53, a measurement region 53 may be chosen in accordance with the assigned score value. In the alternative, measurements can be carried out in more than one of the measurement regions 53, in particular in each measurement region 53.

The regions of interest may be obtained as binary areas or as maps of rated areas, each area being assigned a - finite - score value, in particular a score value between zero and one. Also a combined approach may be used.

The at least one measuring region 53 may be determined by a binary decision, or as at least one finally rated area, wherein the at least one finally rated area is assigned a final score value obtained from the score values assigned to the rated areas of the regions of interest. Also a combined approach may be used.

The at least one system parameter is preferably selected from a group, consisting of an energy beam alignment, a focus position, a powder property, a powder humidity, a powder compactness, a powder cleanness, a powder purity, and a combination of at least two of said system parameters.

A manufacturing method for additively manufacturing an object from a powder material using the manufacturing device 1 preferably comprises the following steps: manufacturing the object by locally selectively irradiating a first plurality of powder material layers, layer by layer, with the at least one energy beam 11, and measuring at least one system parameter of the manufacturing device 1 by carrying out the above described measuring method. The at least one system parameter may be measured prior to the manufacturing of the object, or after the manufacturing of the object, or during the manufacturing of the object, in particular by carrying out the measuring method for at least one of the powder material layers, or for a second plurality of powder material layers, the second plurality comprising a lower number of powder material layers then the first plurality, or for all powder material layers of the first plurality.

**Claims**

1. Method for measuring at least one system parameter in a manufacturing device (1) for additively manufacturing objects from a powder material (5), the method comprising:

   - evaluating at least two input states for a powder material layer;
   - determining at least one measuring region in the powder material layer depending on the evaluation of the at least two input states, and
   - measuring the at least one system parameter in the determined at least one measuring region.

2. Method according to claim 1, wherein at least one of the at least two input states is selected from a group, consisting of a geometry of an object's section in the powder material layer, a geometry of an object's section in a previous powder material layer below the powder material layer, a geometry of an object's section in a subsequent powder material layer above the powder material layer, a powder bed property, a user defined condition, a predefined developer condition, an energy beam-related condition, a detector-related condition, a measurement-related condition, and a combination of at least two of said input states.

3. Method according to claim 2, wherein the local powder bed property includes or is derived from data from a powder bed monitoring, wherein optionally the local powder bed property comprises at least one property selected from a group, consisting of a powder deficient region, a powder overflowing region, a powder defect region, an object defect region, and a combination of at least two of said properties.

4. Method according to any of the preceding claims, wherein the method is carried out for a plurality of powder material layers, in particular for each powder material layer.

5. Method according to any of the preceding claims, wherein the at least two input states are evaluated by determining the respective region of interest in the powder material layer for each input state and the at least one measuring region is determined by combining the at least two regions of interest, preferably using at least one operation, selected from a group, consisting of a union creation, an intersection creation, a subtraction, a convolution, and a combination of at least two of said operations.

6. Method according to claim 5, wherein more than two regions of interest are subsequently combined, in particular sequentially or at once, optionally by first combining two regions of interest, obtaining a resulting region of interest, and then combining the resulting region of interest with a further region of interest, and optionally continuing this process until all regions of interest are combined and a final resulting region of interest is obtained, wherein the final resulting region of interest is the at least one measuring region.

7. Method according to any of claims 5 or 6, wherein the regions of interests are obtained as binary areas, or the regions of interest are obtained as maps of rated areas, each area being assigned a score value, or wherein the regions of interests are obtained in a combined approach combining binary areas and maps of rated areas.

8. Method according to any of the preceding claims, wherein the at least one measuring region is determined by a binary decision, or as at least one finally rated area, wherein optionally the at least one finally rated area is assigned a final score value obtained from the score values assigned to the rated areas of the regions of interest.

9. Method according to any of the preceding claims, wherein the at least one system parameter is selected from a group, consisting of an energy beam alignment, a focus position, a powder property, a powder humidity, a powder compactness, a powder cleanness, a powder purity, and a combination of at least two of said system parameters.

10. Method for additively manufacturing an object from a powder material (5) using a manufacturing device (1), comprising the following steps:

    - manufacturing the object by locally selectively irradiating a first plurality of powder material layers, layer by layer, with at least one energy beam (11) of the manufacturing device (1), and
    - measuring at least one system parameter of the manufacturing device (1) by carrying out a measuring method according to any of the preceding claims, wherein
    - the at least one system parameter is measured

    ◦ prior to the manufacturing of the object, or
    ◦ after the manufacturing of the object, or
    ◦ during the manufacturing of the object, in particular by carrying out the measuring method for at least one of the powder material layers, or for a second plurality of powder material layers, the second plurality comprising a lower number of powder material layers then the first plurality, or for all powder material layers of the first plurality.

11. Computer program comprising instructions which, when the computer program is executed on a computing device, cause the computing device to carry out a method according to any of claims 1 to 10.

12. Control device (3) for controlling a manufacturing device (1) for additively manufacturing objects from a powder material (5), the control device (3) being adapted to carry out a method according to any of claims 1 to 10.

13. Manufacturing device (1) for additively manufacturing objects from a powder material (5), having

    - a beam generating device (9) adapted to generate at least one energy beam (11),
    - at least one scanning device (13) adapted to locally selectively irradiate a working area (7) with the at least one energy beam (11) to produce an object from the powder material (5) disposed in the working area (7) by displacing the at least one energy beam (11) across the working area (7), and
    - the control device (3) of claim 12.

Fig. 1

Fig. 2

Europäisches
Patentamt
European
Patent Office
Office européen
des brevets

# EUROPEAN SEARCH REPORT

**Application Number**

EP 24 18 4180

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/154764 A1 (TSUTAGAWA NARI [JP] ET AL) 27 May 2021 (2021-05-27) <br> * paragraphs [0058], [0084] - [0099], [0108], [0115] - [0117], [0122], [0123], [0156] * <br> * figures 11-14,16 * | 1-13 | INV. <br> B22F10/85 <br> B22F10/28 <br> B22F12/90 <br> B33Y10/00 <br> B33Y30/00 <br> B33Y50/02 |
| X | US 2023/278134 A1 (POURCHO JOHN BRYAN [US] ET AL) 7 September 2023 (2023-09-07) <br> * paragraphs [0037] - [0039], [0055], [0056], [0063], [0066], [0069], [0071], [0072], [0080] * <br> * claims 1-3 * <br> * figures 1,4,5,7 * | 1-13 | |
| X | JP 2018 020518 A (ASPECT INC) 8 February 2018 (2018-02-08) <br> * paragraph [0089] * <br> * claim 1 * <br> * figure 7 * | 1-13 | |

**TECHNICAL FIELDS SEARCHED (IPC)**

B22F
B33Y
B29C

The present search report has been drawn up for all claims

| Place of search | Date of completion of the search | Examiner |
|---|---|---|
| The Hague | 21 November 2024 | Järvi, Tommi |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

...........................................................................
& : member of the same patent family, corresponding
    document

EPO FORM 1503 03.82 (P04C01)

**EP 4 670 874 A1**

## ANNEX TO THE EUROPEAN SEARCH REPORT
## ON EUROPEAN PATENT APPLICATION NO.

EP 24 18 4180

This annex lists the patent family members relating to the patent documents cited in the above-mentioned European search report.
The members are as contained in the European Patent Office EDP file on
The European Patent Office is in no way liable for these particulars which are merely given for the purpose of information.

21-11-2024

| Patent document cited in search report | Publication date | Patent family member(s) | Publication date |
|---|---|---|---|
| US 2021154764 A1 | 27-05-2021 | EP 3789140 A1 | 10-03-2021 |
| | | JP 7008669 B2 | 25-01-2022 |
| | | JP 2021041568 A | 18-03-2021 |
| | | US 2021154764 A1 | 27-05-2021 |
| US 2023278134 A1 | 07-09-2023 | CN 116689788 A | 05-09-2023 |
| | | EP 4238673 A1 | 06-09-2023 |
| | | JP 2023130303 A | 20-09-2023 |
| | | US 2023278134 A1 | 07-09-2023 |
| JP 2018020518 A | 08-02-2018 | JP 6811982 B2 | 13-01-2021 |
| | | JP 2018020518 A | 08-02-2018 |

EPO FORM P0459

For more details about this annex : see Official Journal of the European Patent Office, No. 12/82